Europäisches Patentamt

European Patent Office

Office européen des brevets

(11) Publication number : **0 468 773 A1**

## (12) EUROPEAN PATENT APPLICATION

(21) Application number : **91306759.1**

(22) Date of filing : **24.07.91**

(51) Int. Cl.⁵ : **C08L 67/02, C08K 5/54**

(30) Priority : **25.07.90 JP 197004/90**

(43) Date of publication of application :
**29.01.92 Bulletin 92/05**

(84) Designated Contracting States :
**AT BE CH DE DK ES FR GB GR IT LI LU NL SE**

(71) Applicant : **POLYPLASTICS CO. LTD.**
**3-13, Azuchicho, 2-chome**
**Chuo-Ku Osaka-shi Osaka 541 (JP)**

(72) Inventor : **Itoh, Haruyasu**
**324 Miyashita**
**Fuji-shi, Shizuoka (JP)**
Inventor : **Suzuki, Masato**
**411 Kogane, Kanbaracho**
**Ihara-gun, Shizuoka (JP)**

(74) Representative : **Jackson, Peter**
**HYDE, HEIDE & O'DONNELL 10-12 Priests**
**Bridge**
**London SW15 5JE (GB)**

(54) **Hollow polybutylene terephthalate resin molding and process for producing the same.**

㉗    A hollow article of polybutylene terephthalate is efficiently obtained by blending and kneading l00 parts by weight of polybutylene terephthalate with 0.0l to 5 parts by weight of an alkoxysilane (selected from vinylalkoxysilanes, epoxyalkoxysilanes, aminoalkoxysilanes, allylalkoxysilanes and mercaptoalkoxysilanes) and blow-molding the blend into a hollow article. The blend may further contain 0.5 to 30 parts by weight of an olefin copolymer of an α-olefin and α,ß-unsaturated glycidyl ester or its graft copolymer on a vinyl (co)polymer. The process prevents parison drawdown and breakage in the course of blowing. The hollow article is improved in respect of uniform wall thickness and appearance and is useful for automobile and car components.

EP 0 468 773 A1

The present invention relates to a hollow polybutylene terephthalate resin molding and a process for producing the same.

Polybutylene terephthalate (hereinafter referred to as "PBT") resins, usually in the form of a composition thereof containing an inorganic filler, have come to be widely used as the constructional material for automobile parts, electric and electronic components and chemical instrument parts. These uses take advantage of the excellent properties of PBT resins, such as mechanical strength, heat resistance, chemical resistance and good electrical properties.

Formation of a hollow molding from an ordinary thermoplastic resin is usually conducted by blow molding. When a hollow molding is to be produced from PBT resin by blow molding, however, a molten intermediate parison causes drawdown, since the level of melt tension required for good blow molding is not reached by PBT resin, and the subsequent blow molding is therefore quite difficult. As a result, hollow moldings of PBT resin could not hitherto be produced by any process other than injection molding, which is relatively inefficient. Although it has been attempted to increase the molecular weight of the PBT resin in order to increase the melt tension thereof, since a high melt tension can be usually obtained by using a resin having a high molecular weight and a high melt viscosity, the mere use of PBT of high molecular weight and viscosity was insufficient. The use of an inorganic filler in combination the PBT has also been attempted but was also not particularly effective.

After intensive investigations made for the purpose of solving the problems of the blow moldability of the PBT resin, the inventors have found a process for considerably improving the melt tension of PBT resin and thereby making the blow molding of this resin possible. The present invention has been completed on the basis of this finding.

Thus the present invention provides a process for producing a hollow molding of a PBT resin by blow molding, characterized in that 0.0l to 5 parts by weight of at least one organosilane compound selected from among alkoxysilane compounds such as vinylalkoxysilanes, epoxyalkoxysilanes, aminoalkoxysilanes, allylalkoxysilanes and mercaptoalkoxysilanes is added to l00 parts by weight of the PBT and the mixture is melt-kneaded to form a PBT resin, which is blow-molded.

The inventors have found also that the use of the above-described alkoxysilane compound in combination with a small amount of an olefinic copolymer comprising a copolymer of an $\alpha$-olefin with an $\alpha$,ß-unsaturated glycidyl ester or a graft copolymer comprising this copolymer and a vinyl (co)polymer further chemically bonded thereto to form a branched or crosslinked structure is effective in further improving the melt tension and enhancing the blow moldability.

The PBT resins described herein are polyesters comprising butylene terephthalate as the main recurring unit. In particular, they are polyesters obtained by condensing l,4-butanediol with terephthalic acid or its lower alcohol ester as the main components. They are not limited to PBT homopolymers but include also copolymers mainly comprising PBT. The term "copolymers" herein refers to copolymers obtained by the polycondensation of terephthalic acid or its lower alcohol ester as the main dibasic acid component with l,4-butanediol as the main glycol component in the presence of 40 molar % or less of an ester-forming monomer. The comonomer components usable herein include dibasic acid components such as isophthalic acid, orthophthalic acid, adipic acid, sebacic acid, succinic acid and oxalic acid as well as lower alcohol esters thereof; and glycol components such as ordinary alkylene glycols other than l,4-butanediol, e.g. ethylene glycol, diethylene glycol, propylene glycol, trimethylene glycol, hexamethylene glycol, neopentyl glycol and cyclohexanedimethanol as well as aromatic diols, e.g. bisphenol A and ethylene oxide (2 mol) adduct of bisphenol A.

Hydroxy acids such as hydroxybenzoic acid and hydroxynaphthoic acid and ester-forming derivatives of them are also usable as the comonomer. The comonomers having a halogen as a substituent are also usable and they are effective in imparting flame retardancy to the moldings.

In addition, copolyesters having a branched structure obtained by the polycondensation of a polyfunctional compound having three or more reactive groups as the monomer are also preferred PBT resins. The polyfunctional compounds usable herein include trimesic acid, trimellitic acid, pyromellitic acid and alcoholicesters thereof as well as glycerol, trimethylolethane, trimethylolpropane and pentaerythritol.

The PBT resin used as the base resin in the present invention is preferably one having an intrinsic viscosity in the range of 0.7 to 2.0, particularly l.0 to l.6, since it has a high melt tension and excellent blow moldability and mechanical properties. When a PBT resin having an intrinsic viscosity of lower than 0.7 is used, a sufficient melt tension cannot be obtained even by the process of the present invention and, therefore, sufficient blow moldability and mechanical strength cannot be obtained. On the other hand, an intrinsic viscosity exceeding 2.0 is unfavorable because the fluidity of the resin composition is poor and the extrusion moldability is impaired by overloading of the extruder motor and elevation of pressure applied to the die.

The process of the present invention for blow-molding the PBT resin and the hollow moldings produced by this process are characterised in that a specified organic silane compound, particularly an alkoxysilane, is added to the PBT resin and the mixture is melt-kneaded and then blow-molded. Surprisingly the addition of the organosilane compound considerably improves the melt tension of the PBT resin thereby making possible its stable blow molding, even by using a PBT of any viscosity (molecular weight), whereby hollow moldings having a stable quality can be obtained.

The organosilane compounds usable herein are alkoxysilanes such as vinylalkoxysilanes, epoxyalkoxysilanes, aminoalkoxysilanes, allylalkoxysilanes and mercaptoalkoxysilanes. They can be used either singly or in combination of two or more of them.

Examples of the vinylalkoxysilanes include vinyltriethoxysilane, vinyltrimethoxysilane and vinyltris-(ß-methoxyethoxy)silane.

Examples of the epoxyalkoxysilanes include
$\Upsilon$glycidoxypropyltrimethoxysilane,
ß-(3,4-epoxycyclohexyl)ethyltrimethoxysilane and
$\Upsilon$-glycidoxypropyltriethoxysilane.

Examples of the aminoalkoxysilanes include
$\Upsilon$-aminopropyltrimethoxysilane,
$\Upsilon$-aminopropyltriethoxysilane,
$\Upsilon$-aminopropylmethyldimethoxysilane,
$\Upsilon$-aminopropylmethyldiethoxysilane,
N-(ß-aminoethyl)-y-aminopropyltrimethoxysilane and
N-phenyl-$\Upsilon$-aminopropyltrimethoxysilane.

Examples of the allylalkoxysilanes include
$\Upsilon$-diallylaminopropyltrimethoxysilane,
$\Upsilon$-allylaminopropyltrimethoxysilane and
$\Upsilon$-allythiopropyltrimethoxysilane.

Examples of the mercaptoalkoxysilanes include alkoxysilanes such as $\Upsilon$-mercaptopropyltrimethoxysilane and
$\Upsilon$-mercaptopropyltriethoxysilane.

The amount of the silane compound to be added to the PBT resin in the present invention is 0.0l to 5 parts by weight, preferably 0.l to 3 parts by weight, for l00 parts by weight of the PBT resin. When it is less than 0.0l part by weight, the intended effect of the invention is not obtained and, on the contrary, when it is in excess of 5 parts by weight, side reactions occur and the viscosity is unfavourably increased to an abnormal extent.

Although it is not indispensable for the present invention, it is preferred to use the above-described constituents in combination with an olefinic copolymer comprising an $\alpha$-olefin and a glycidyl ester of an $\alpha$,ß-unsaturated acid, or a graft copolymer produced by chemically bonding such a copolymer to a vinyl (co)polymer to form a branched or crosslinked structure.

The olefinic copolymers comprising an $\alpha$-olefin and a glycidyl ester of an $\alpha$,ß-unsaturdated acid are those containing a copolymer of an $\alpha$-olefin such as ethylene, propylene or butene-l with a glycidyl ester of an $\alpha$,ß-unsaturated acid, such as glycidyl acrylate, glycidyl methacrylate, glycidyl ethacrylate or glycidyl itaconate, in the molecular structure thereof. Among them, a copolymer of ethylene with glycidyl methacrylate can be preferably used.

A graft copolymer comprising the above-described copolymer and a vinyl (co)polymer further chemically bonded thereto to form a branched or crosslinked structure is a much preferred copolymer to be used in combination with the resin. The vinyl (co)polymer segment herein is a polymer or copolymer such as polystrene, polyacrylonitrile, polyalkyl acrylate or polyalkyl methacrylate. Among them, olefinic graft copolymers (having a multilayered structure) described in Japanese Patent Laid-Open No. 3l23l3/l988 are particularly preferred for the blow molding of the present invention.

The amount of the olefinic copolymer used in the present invention is not more than 30 parts by weight, preferably 0.5 to 20 parts by weight, for l00 parts by weight of the PBT resin. When this amount is insufficient, the blow moldability is inclined to be unstable and, on the contrary, when it exceeds 30 parts by weight, the melt viscosity increases to make the extrusion molding difficult and some problems occur in the properties of the moldings.

A fibrous, powdery, granular or platy filler can be added to the PBT resin material to be blow-molded according to the purpose in the present invention.

Suitable fibrous fillers include inorganic ones such as glass fibers, asbestos fibers, carbon fibers, silica fibers, silica/alumina fibers, zirconia fibers, boron nitride fibers, silicon nitride fibers, boron fibers and potassium titanate fibers and fibrous metals such as stainless steel, aluminium, titanium, copper and brass. Particularly typical fillers are glass fibers.

Suitable powdery or granular fillers include carbon black; silicates such as silica, guartz powder, glass beads, glass powder, calcium silicate, aluminium silicate, kaolin, talc, clay, diatomaceous earth and wollastonite; metal oxides such as iron oxides, titanium oxides, zinc oxides and alumina; metal carbonates such as calcium carbonate and magnesium carbonate; metal sulphates such as calcium sulphate and barium sulphate; as well as silicon carbide, silicon nitride, boron nitride and various metal powders.

Suitable platy fillers include mica, glass flakes and various metal foils.

These inorganic fillers can be used either singly or in combination of two or more of them. A combination of a fibrous filler, particularly glass fiber, with a granular and/or platy filler is preferred for imparting excellent mechanical strength, dimensional accuracy and electrical properties to the moldings.

These fillers are preferably used in combination with a binder or a surface-treating agent such as a functional compound, e.g. epoxy, isocyanate, titanate and silane compounds.

In the blow molding according to the present invention, a small amount of another thermoplastic resin can also be used as an assistant in addition to the above-described components.

Other thermoplastic resins usable herein may be any thermoplastic resin stable at a high temperature. Examples of them include polyolefinic (co)polymers other than those described above, aromatic polyesters such as polyethylene terephthalate, polyamides, polycarbonates, ABS, polyphenylene oxides, polyphenylene sulphides, polyalkyl acrylates, polyacetals, polysulphones and fluororesins. These thermoplastic resins can be used also in the form of a mixture of two or more of them.

Known substances usually added to synthetic resins can be added to the PBT resin of the present invention depending on its required properties. They include stabilizers such as antioxidants and ultraviolet absorbers; antistatic agents; flame retardants; colorants such as dyes and pigments, lubricants, release agents, crystallization accelerators and nucleating agents.

In the blow molding process of the present invention, at least the above-described alkoxysilane is added to the PBT resin, the mixture is melt-kneaded, desirably the above-described olefinic copolymer is further added thereto and, if necessary, other desired components are also added thereto, and the resultant mixture is melt-kneaded and blow-molded. The melt kneading of the mixture is conducted with a single-screw or twin-screw extruder to form pellets, which are then subjected to the blow molding or, alternatively, the melt-kneaded mixture is directly formed into a parison for the blow molding, which is subjected to the molding.

The blow molding in the present invention is conducted by an ordinary method by using a blow molding machines usually used for the blow molding of a thermoplastic resin. In this process, the above-described PBT resin composition is plasticized with an extruder or the like and extruded or injected through an annular die to form an annular molten or softened intermediate parison, which is clamped in a mold, a gas is blown into the parison to inflate it, and the inflated parison is solidified by cooling to form a hollow molding. As for the molding conditions of the PBT resin composition of the present invention, the temperatures of the cylinder and the die are each preferably 225 to 280°C, more preferably 230 to 250°C. The mold temperature is preferably 40 to 120°C, more preferably 60 to 100°C. Although the blowing gas may be air, nitrogen or any other gas, air is usually used from the economic viewpoint, and the blowing pressure is preferably in the range of about 0.4 to 1.0 MPa (4 to 10 kg/cm$^2$).

The process of the present invention makes possible stable blow molding of PBT resin which has hitherto been extremely difficult, thus providing a hollow molding having stable quality and shape. It is expected that the PBT resin material will be widely used for the production of hollow moldings having excellent properties inherent in the PBT resin material and suitably usable under severe conditions, such as industrial parts of automobiles and chemical apparatuses and tools, vessels and other hollow moldings of which heat resistance and chemical resistance are required; and as containers for foods and drinks, making the best use of gas-barrier properties, lack of odour and lack of odour-retaining properties thereof.

## Examples

The following non-limiting Examples further illustrate the present invention.

Examples 1 to 5 and Comparative Examples 1 to 3

Υ-Aminopropyltriethoxysilane and, if necessary, an olefinic copolymer (see Note 2 given below) in amounts specified in Table 1 were added to a PBT resin (homopolymer) having an intrinsic viscosity of 1.50, and the mixture was melt kneaded and extruded with a twin-screw extruder at a cylinder temperature of 250°C to form pellets. Then the pellets were molded into a square-column vessel having an average thickness of 4 mm with a blow molding machine (DA-75 manufactured by Placo Co. Ltd) at a cylinder temperature of 240°C, a die (diameter: 60 mm) temperature of 230°C, a mold temperature of 60°C and a blowing pressure of 0.59 MPa (6 kg/cm$^2$). In this step, the moldability (drawdown and film breakage in the course of blowing), uniformity of the thickness of the molding and appearance thereof (surface roughening and unevenness) were observed. For comparison, the same procedure as that described above was repeated except that no organosilane compound was used. The results are given in Table I. The evaluation methods were as described below.

l) Drawdown of parison

Parisons were formed by extrusion to a length of 200 mm through a die (diameter: 60 mm, die distance: 6 mm) with the above-described blow molding machine. After I0 seconds, the length of each parison was measured to classify them into groups of "minute" (2I0 mm or below), "small" (2I0 to 250 mm? and "large" (250 mm or above). When the parison was broken and dropped down by gravity, it was indicated as "DD".

2) Uniformity of thickness of molding:

The molding was cut and the thicknesses of each side of the square column vessel, and the upper, central and lower parts thereof were determined with a micrometer to examine changes (%) in the thickness.

3) Breakage in the course of blowing:

The breakage of the material in the course of molding was examined with the naked eye.

4) Appearance:

The surface smoothness (unevenness) was observed with the naked eye and classified into four grades of "excellent", "good", "acceptable" and "bad".

## Examples 6 to I5 and Comparative Examples 4 to 6

An organosilane (se Note I given below) and an olefinic graft copolymer (see Note 2 given below) of the varieties and in the amounts specified in Table 2 were added to a PBT resin (homopolymer) having an intrinsic viscosity of I.2. The mixture was pelletized and blow-molded and the moldings were evaluated in the same manner as that of Examples I to 5. The results are given in Table 2.

## Examples I6 to I8 and Comparative Examples 7 and 8

An organosilane compound and, if necessary, an olefinic copolymer of varieties specified in Table 3 in amounts specified in Table 3 and a glass fiber (diameter: I0μm, length: 3 mm) as the inorganic filler were added to a PBT resin (homopolymer) having an intrinsic viscosity of I.2. The mixture was extruded into pellets, which were blow-molded and the moldings were evaluated in the same manner as that described above. The results are given in Table 3.

## Example I9 and Comparative Example 6

A similar test to that of Example 8 and Comparative Example 4 was conducted except that PBT homopolymer was replaced with a PBT copolymer (intrinsic viscosity: I.2) having I2 molar %, based on the terephthalic acid group, of an isophthalic acid group introduced thereinto. The results were substantially equivalent to those of Example 8 and Comparative Example 4.

## Example 20 and Comparative Example I0

A similar procedure to that of Example 8 and Comparative Example 4 was conducted except that the PBT homopolymer was replaced with a branched PBT (intrinsic viscosity: I.5) having about 0.2 molar %, based on the terephthalic acid group, of a trimellitic acid group introduced thereinto. The results were substantially equivalent or rather superior to those of Example 8 and Comparative Example 4.

Table 1

| | | Ex. No. | | | | | Comp. Ex. No. | | |
|---|---|---|---|---|---|---|---|---|---|
| | | 1 | 2 | 3 | 4 | 5 | 1 | 2 | 3 |
| PBT (pts. wt.) | | 100 | 100 | 100 | 100 | 100 | 100 | 100 | 100 |
| Organosilane (note 1) (pts. wt.) | | A 0.5 | A 1.0 | A 2.0 | A 1.0 | A 1.0 | – | A 10 | – |
| Olefinic copolymer (note 2) (pts. wt.) | | – | – | – | E/GMA 5 | E/GMA 20 | – | – | E/GMA 20 |
| Inorganic fill (pts. wt.) | | – | – | – | – | – | – | – | – |
| Moldability | drawdown of parison | small | small | minute | minute | minute | DD | machine halt due to overload | DD |
| | breakage in blowing | no | no | no | no | no | molding impossible | | |
| Molding | thickness uniformity (%) | 25 | 15 | 10 | 10 | 10 | molding impossible | | |
| | appearance | acceptable | good | good | good | good | | | |

EP 0 468 773 A1

EP 0 468 773 A1

Table 2

| | | Ex. No. | | | | | | | | | | Comp. Ex. No. | | |
|---|---|---|---|---|---|---|---|---|---|---|---|---|---|---|
| | | 6 | 7 | 8 | 9 | 10 | 11 | 12 | 13 | 14 | 15 | 4 | 5 | 6 |
| PBT (pts. wt.) | | 100 | 100 | 100 | 100 | 100 | 100 | 100 | 100 | 100 | 100 | 100 | 100 | 100 |
| Organosilane (note 1) (pts. wt.) | | A 0.1 | A 1.0 | A 1.0 | A 2.0 | B 1.0 | C 1.0 | D 1.0 | E 1.0 | A 1.0 | A 1.0 | - | - | - |
| Olefinic copolymer (note 2) (pts. wt.) | | E/GMA-gST 10 | E/GMA-gST 5 | E/GMA-gST 10 | E/GMA-gST 10 | E/GMA-gST 10 | E/GMA-gST 10 | E/GMA-gST 10 | E/GMA-gST 10 | E/GMA-gPMA 10 | E/GMA-gAN 10 | E/GMA-gST 10 | E/GMA-gPMA 10 | E/GMA-gAN 10 |
| Inorganic fill (pts. wt.) | | - | - | - | - | - | - | - | - | - | - | - | - | - |
| Moldability | drawdown of parison | large | minute | minute | minute | minute | minute | minute | minute | minute | minute | large | large | large |
| | breakage in blowing | no | no | no | no | no | no | no | no | no | no | yes | yes | yes |
| Molding | thickness uniformity (%) | 25 | 10 | 5 | 5 | 5 | 5 | 5 | 5 | 5 | 5 | molding difficult | molding difficult | molding difficult |
| | appearance | acceptable | excellent | excellent | excellent | excellent | excellent | excellent | excellent | excellent | excellent | | | |

Table 3

| | Ex. No. | | | Comp. Ex. No. | |
|---|---|---|---|---|---|
| | 16 | 17 | 18 | 7 | 8 |
| PBT (pts. wt.) | 100 | 100 | 100 | 100 | 100 |
| Organosilane (note 1) (pts. wt.) | A 1.0 | A 1.0 | B 1.0 | - | - |
| Olefinic copolymer (note 2) (pts. wt.) | - | E/GMA-gST 10 | E/GMA-gST 10 | - | E/GMA-gST 10 |
| Inorganic fill (pts. wt.) | GF 20 | GF 20 | GF 20 | GF 20 | GF 20 |
| Moldability — drawdown of parison | minute | minute | minute | DD | large |
| Moldability — breakage in blowing | no | no | no | molding impossible | yes |
| Molding — thickness uniformity (%) | 10 | less than 5 | less than 5 | molding impossible | molding difficult |
| Molding — appearance | good | good | good | | |

Note I) Organosilane compounds:

A:     Υ-aminopropyltriethoxysilane
B:     Υ-glycidoxypropyltrimethoxysilane
C:     Υ-mercaptopropyltrimethoxysilane
D:     vinyltrimethoxysilane
E:     Υ-diallylaminopropyltrimethoxysilane

Note 2) Olefinic copolymers:

E/GMA:          ethylene/glycidyl methacrylate copolymer (weight ratio: 85/l5)
E/GMA-GPAM:     graft copolymer onto E/GMA of polymethyl methacrylate (weight ratio: 70-30)
E/GMA-gST:      graft copolymer onto E/GMA of polystyrene (weight ratio: 70-30)
EGMA-gAN:       graft copolymer onto E/GMA of polyacrylonitrile (weight ratio: 70-30)

Note 3)

GF:    glass fiber

**Claims**

1.  A process for producing a hollow polybutylene terephthalate resin molding by blow molding, characterized in that 0.0l to 5 parts by weight of an alkoxysilane compound is added to l00 parts by weight of polybutylene terephthalate and the mixture is melt-kneaded to form a polybutylene terephthalate resin which is blow-molded.

2.  A process for producing a hollow molding according to Claim I, wherein the alkoxysilane compound is at least one organosilane compound selected from among vinylalkoxysilanes, epoxyalkoxysilanes, aminoalkoxysilanes, allylalkoxysilanes and mercaptoalkoxysilanes.

3.  A process for producing a hollow molding according to Claim I or 2, wherein 0.5 to 30 parts by weight of an olefinic copolymer of an α-olefin with an α,ß-unsaturated glycidyl ester is further added to l00 parts by weight of the polybutylene terephthalate resin and the mixture is melt-kneaded to form a resin composition, which is blow-molded.

4.  A process for producing a hollow molding according to Claim I or 2, wherein 0.5 to 30 parts by weight of a graft copolymer comprising a copolymer of an α-olefin with an α,ß-unsaturated glycidyl ester and a vinyl (co)polymer chemically bonded thereto to form a branched or crosslinked structure is further added to l00 parts by weight of the polybutylene terephthalate resin and the mixture is melt-kneaded to form a resin composition, which is blow-molded.

5.  A process for producing a hollow molding according to any of Claims I to 4, wherein a resin composition further containing I to 400 parts by weight of an inorganic filler for I00 parts by weight of a polybutylene terepthalate resin is blow-molded.

6.  A hollow polybutylene terephthalate resin molding producing by the blow molding process according to any of Claims I to 5.

7.  A polybutylene terephthalate resin composition for blow molding, which comprises a melt-kneaded mixture of 0.0l to 5 parts by weight of an alkoxysilane compound and I00 parts by weight of a polybutylene terephthalate resin having an intrinsic viscosity in the range of 0.7 to 2.0.

8.  A polybutylene terephthalate resin composition according to Claim 7, in which the melt-kneaded mixture further comprises 0.5 to 30 parts by weight (per I00 parts by weight of the polybutylene terephthalate) of an olefinic copolymer of an α-olefin with an α,ß-unsaturated glycidyl ester.

9.  A polybutylene terephthalate resin composition according to Claim 7, in which the melt-kneaded mixture further comprises 0.5 to 30 parts by weight (per l00 parts by weight of the polybutylene terephthalate) of an graft copolymer comprising an olefinic copolymer of an α-olefin with an α,ß-unsaturated glycidyl ester and a vinyl (co)polymer chemically bonded thereto to form a branched or crosslinked structure.

10. A polybutylene terephthalate resin composition according to Claim 8 or Claim 9, in which the olefinic copolymer is a copolymer of ethylene with glicidyl methacrylate.

**European Patent Office**

# EUROPEAN SEARCH REPORT

Application Number

| DOCUMENTS CONSIDERED TO BE RELEVANT | EP 91306759.1 |

| Category | Citation of document with indication, where appropriate, of relevant passages | Relevant to claim | CLASSIFICATION OF THE APPLICATION (Int. Cl.5) |
|---|---|---|---|
| A | WO - A1 - 90/02 155 (GENERAL ELECTRIC COMPANY) * Page 6, line 6 - page 10, line 35; page 11, lines 23-25 examples; claims * | 1-10 | C 08 L 67/02 C 08 K 5/54 |
| A | EP - A2 - 0 262 929 (MITSUI PETROCHEMICAL INDUSTRIES LTD.) * Page 2, line 58 - page 3, line 7; page 3, line 18 - page 4, line 44; examples; claims * | 1-10 | |
| D,A | PATENT ABSTRACTS OF JAPAN, unexamined applications, C field, vol. 13, no. 156, April 14, 1989 THE PATENT OFFICE JAPANESE GOVERNMENT page 83 C 585 * Kokai-no. 63-312 313 (NIPPON PETROCHEM CO LTD) * | 1-10 | |

TECHNICAL FIELDS SEARCHED (Int. Cl.5)

C 08 K 67/00
C 08 K 23/00
C 08 L

The present search report has been drawn up for all claims

| Place of search | Date of completion of the search | Examiner |
|---|---|---|
| VIENNA | 07-10-1991 | TENGLER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&: member of the same patent family, corresponding document

EPO FORM 1503 03.82 (P0401)

11